# EUROPÄISCHE PATENTSCHRIFT

(11) **EP 3 371 471 B1**
(45) Veröffentlichungstag und Bekanntmachung des Hinweises auf die Patenterteilung: **03.03.2021**
(21) Anmeldenummer: 16798399.8
(22) Anmeldetag: 26.10.2016
(51) Int. Cl.: F16C 29/08, F16C 33/66

(54) **WÄLZKÖRPER-UMLAUFSCHUH FÜR EIN LINEARWÄLZLAGER MIT EINEM VORSATZELEMENT ZUR LANGZEITSCHMIERUNG**
BEARING BODY FOR A LINEAR BEARING HAVING AN ATTACHMENT ELEMENT FOR LONG-TERM LUBRICATION
CORPS POUR PALIER À ROULEAU LINÉAIRE AVEC ÉLÉMENT DE BLOC POUR LE GRAISSAGE À LONG TERME

(30) Priorität: 02.11.2015 DE 102015014058; 18.02.2016 DE 102016202502
(43) Veröffentlichungstag der Anmeldung: 12.09.2018
(73) Patentinhaber: Schaeffler Technologies AG & Co. KG, 91074 Herzogenaurach (DE)
(72) Erfinder: DANIEL, Patrick, 66459 Kirkel (DE); STALTER, Ralf, 66482 Zweibrücken (DE)
(86) Internationale Anmeldenummer: PCT/DE2016/200492
(87) Internationale Veröffentlichungsnummer: WO 2017/076408

(56) Entgegenhaltungen:
- EP-A1- 2 913 545
- DE-A1- 4 141 038
- DE-A1- 4 438 566
- DE-A1- 19 845 181
- JP-A- 2002 048 137
- US-A1- 2013 216 160

## Beschreibung

Die Erfindung betrifft einen Wälzkörper-Umlaufschuh für ein Linearwälzlager, welcher als Schmiervorrichtungen stirnseitig angeordnete Vorsatzelemente aufweist, wobei ein Vorsatzelement jeweils ein Volumen zur Schmierstoff-Speicherung und Schmierstoff-Übergabe an eine den Umlaufschuh führende Schiene enthält.

### Hintergrund der Erfindung

Der Einsatz eines solchen Vorsatzeiementes liegt im Bereich der Schmierstoff-Bevorratung in der Wälzlagertechnik durch Vorratsvolumen in oder an Lagern im Allgemeinen. Speziell handelt es sich hier um ein Vorsatzelement für einreihige, lineare Umlaufschuhe.

Stand der Technik ist es, Kammern mit Schmierstoffen an Wälzlagern anzubringen. Als Beispiel sei hier eine erste Ausführung einer Langzeit-Schmiereinheit im Linearbereich genannt, die in den Druckschriften DE 10 2009 016 458 A1 und DE 10 2009 016 459 A1 beschrieben ist. Diese verwendet einen aus einem saugfähigen Material bestehenden und mit einem fließfähigen Schmierstoff tränkbaren Speicherkörper. Derartige Speicherkörper werden in der Form der Hohlräume der jeweiligen Schmiervorrichtung ausgeformt.

Eine zweite Ausführung einer derartigen Schmiervorrichtung ist aus der Druckschrift DE 198 45 181 A1 bekannt. Bei dieser befindet sich in einem Gehäuse, welches den Schmierstoff enthält, jeweils ein Spender, welcher mit den betreffenden Laufbahnen der Führungsschiene in Gleitkontakt steht. Die Schmierstoffspender werden jeweils über eine Feder an die Laufbahnen der Führungsschiene angedrückt und stehen über einen Versorgungskanal mit einem Schmierstoffbehälter in Verbindung. In dem Versorgungskanal und in dem Schmierstoffbehälter ist jeweils ein Speicherkörper aus einem kapillaren Material angeordnet. Dieser Speicherkörper muss in aufwändiger Weise mit den Schmiermedien getränkt werden.

In einer weiteren Ausführung einer Schmiervorrichtung, die aus der Druckschrift DE 20 2004 017 105 U1 bekannt ist, sind mehrere scheibenförmige Faserstoffelemente in dem den Schmierstoffbehälter bildenden Innenraum eines Gehäuses angeordnet, von denen mindestens eines durch Öffnungen in den Innenwänden des Gehäuses hindurchreichenden und mit den Laufbahnen der Führungsschiene in Gleitkontakt stehenden Flanschelementen versehen ist. Die Faserstoffelemente erfüllen die Funktion eines Speicherkörpers und zumindest in einem Fall zugleich die Funktion der Schmierstoffspender.

Die DE 41 41 038 A1 zeigt einen gattungsgemäßen Umlaufschuh mit Vorsatzelement.

### Zusammenfassung der Erfindung

Der Erfindung liegt die Aufgabe zugrunde, ein einfach aufgebautes und leicht montierbares Vorsatzelement für den Umlaufschuh des Linearwälzlagers anzugeben.

Diese Aufgabe wird erfindungsgemäß dadurch gelöst, dass das Vorsatzelement aus einer an dem Kopfstück des Tragkörpers des Umlaufschuhs anliegenden inneren Gehäuseschale und einer von dem Tragkörper abgewandten äußeren Gehäuseschale besteht, welche mittels einer einzigen zentralen Schraube an dem Kopfstück desTragkörpers befestigbar sind.

Das Vorsatzelement kann also an einem bestehenden Umlaufschuh nachträglich montiert werden.

Die Schmierstoff-Übergabestelle des Vorsatzelementes kann Verschleiß kompensierend vorgespannt sein.

Aufgrund seiner Form ist das Vorsatzelement verdrehgesichert an dem Kopfstück zentriert. Es kann außerdem auch verdrehgesichert an einem baugleichen Vorsatzelement zentriert und befestigt sein.

Das Speichervolumen kann durch mindestens zwei Gehäuseschalengebilde bereitgestellt sein, die durch die Vorspannkraft der einzigen zentralen Schraube gegenseitig abgedichtet sind. Auf diese Weise kann es keine ungewollte Leckage des Schmierstoffes zur Umwelt geben. Es empfiehlt sich, eine der Schalen gummielastisch auszuprägen.

Das Vorsatzelement kann so ausgeprägt sein, dass mindestens eine Gehäuseschale einen Abstreifer aufnehmen kann, um gegen die Lauffläche abzudichten. Dabei kann der Abstreifer integral an der anderen Gehäuseschale angeordnet sein. Es empfiehlt sich, diese zur Abdichtung herangezogene Schale gummielastisch auszubilden.

### Kurze Beschreibung der Zeichnung

Ausführungsbeispiele der Erfindung sind in der Zeichnung dargestellt und werden im Folgenden näher beschrieben. Es zeigen
- Figur 1: die Teile eines beispielhaften Rollenumlaufschuhs in explosionsartiger Darstellung;
- Figur 2: den Rollenumlaufschuh, welcher mit den in Figur 1 dargestellten Teilen aufgebaut ist, in perspektivischer Darstellung;
- Figur 3: einen vorbekannten, in der Druckschrift DE 10 2009 016 458 A1 beschriebenen Schmierstoffspeicher eines Rollenumlaufschuhs, in explosionsartiger Darstellung;
- Figur 4: eine weitere vorbekannte, in der Druckschrift DE 198 45 181 A1 offenbarte stirnseitige Ansicht einer Führungsschiene für ein Linearlager mit einer diese teilweise umgreifenden offenen Schmiervorrichtung, in einer Schnittdarstellung;
- Figur 5: perspektivisch einen Rollenumlaufschuh, sowie die Teile von dessen Vorsatzelementen, in explosionsartiger Darstellung;
- Figur 6: den Rollenumlaufschuh mit den Vorsatzelementen gemäß Figur 5, in perspektivischer Darstellung;
- Figur 7: einen erfindungsgemäßen Aufbau eines an dem Rollenumlaufschuh stirnseitig angeordneten Schmierstoffspeichers, im Schnitt;
- Figur 8: den Umlaufschuh mit dem an einer Stirnseite angeordneten Vorsatzelement, welches erfindungsgemäß eine Federung des Schmierstoff-Übergabeelementes aufweist, im 3D-Schnitt;
- Figur 9: den Umlaufschuh mit dem an einer Stirnseite angeordneten Vorsatzelement, welches erfindungsgemäß eine Zentrierung mit Verdrehsicherung seiner Gehäuseschalen aufweist, im 3D-Schnitt
- Figur 10: den Umlaufschuh mit dem Vorsatzelement gemäß Figur 9, im Schnitt;
- Figur 11: den Umlaufschuh mit einer erfindungsgemäßen Zentrierung mit Verdrehsicherung zweier einseitig hintereinander angebrachter Vorsatzelemente, im Schnitt;
- Figur 12: ein Vorsatzelement für einen Rollenumlaufschuh mit integriertem Abstreifer, in perspektivischer Darstellung.

### Ausführliche Beschreibung der Zeichnung

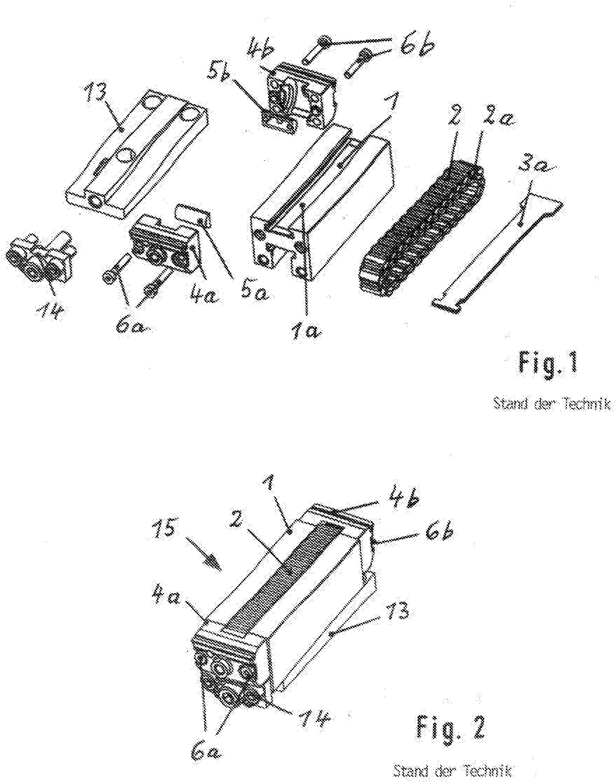

Die Figuren 1 und 2 zeigen einen beispielhaften Umlaufschuh 15 mit Rollen 2 als Wälzkörper, die mit als Spacer 2a bezeichneten Abstandsstücken voneinander getrennt sind. Die Rollen 2 laufen in einem Tragkörper 1 und übertragen über dessen Laufbahn 1a Druckkräfte auf eine nicht dargestellte ebene Laufschiene. Umlaufschuhe gehören zu den wälzgelagerten Umlaufführungen und können axial endlos verschoben werden. Zu diesem Zweck werden die als Rollen 2 ausgebildeten Wälzkörper an einem Ende des Umlaufschuhs 15 jeweils durch innere Umlenkstücke 5a bzw. 5b und durch äußere Umlenkstücke 4a bzw. 4b, die auch Kopfstücke genannt werden, umgelenkt und im Rücken des Tragkörpers 1 zurückgeführt. Die Umlenkstücke werden mit Schrauben 6a und 6b an dem Tragkörper 1 befestigt. Für die Rückführung der Rollen 2 wird der Tragkörper 1 mittels einer Abdeckung 3a gegen Wälzkörperverlust gesichert. Der hier dargestellte Tragkörper 1 des Umlaufschuhs 15 wird mittels eines Vorspannkeils 13 mit der nicht dargestellten Umgebungskonstruktion verbunden. Er wird mit einer Vorspanneinheit 14 so eingestellt, dass zwischen der Umgebungskonstruktion und der Laufschiene der erforderliche Kraftfluss gewährleistet ist.

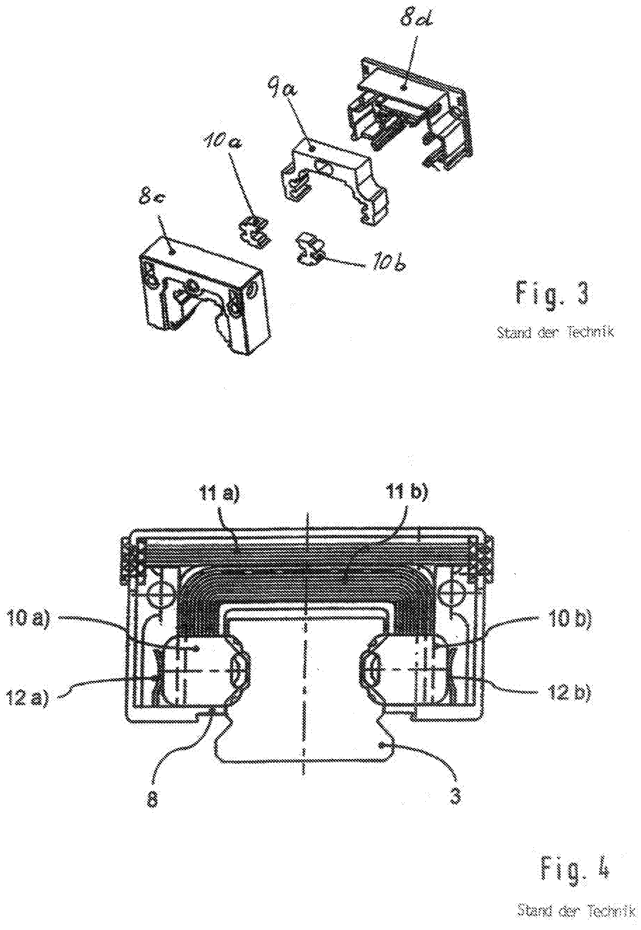

Der in Figur 3 explosionsartig dargestellte vorbekannte Schmierstoffspeicher entsprechend der Druckschrift DE 10 2009 016 458 A1 besteht aus einer äußeren Gehäusehälfte 8c und einer inneren Gehäusehälfte 8d, einem porösen Formteil 9a zur Speicherung von Schmierstoff sowie aus zwei Schmierstoff-Übergabeelementen 10a und 10b für die Übergabe von Schmierstoff an die nicht dargestellte Schiene.

Figur 4 zeigt entsprechend der Druckschrift DE 198 45 181 A1 im geschnittenen Zustand einen vorbekannten Schmierstoffspeicher. Zu sehen sind eine der beiden Gehäusehälften 8 sowie kapillar wirkende Speicherfaserbündel 11a und 11b zur Speicherung und Leitung von Schmierstoff sowie zwei Schmierstoff-Übergabeelemente 10a und 10b, die zur Schiene 3 hin durch Federn 12a und 12b vorgespannt sind.

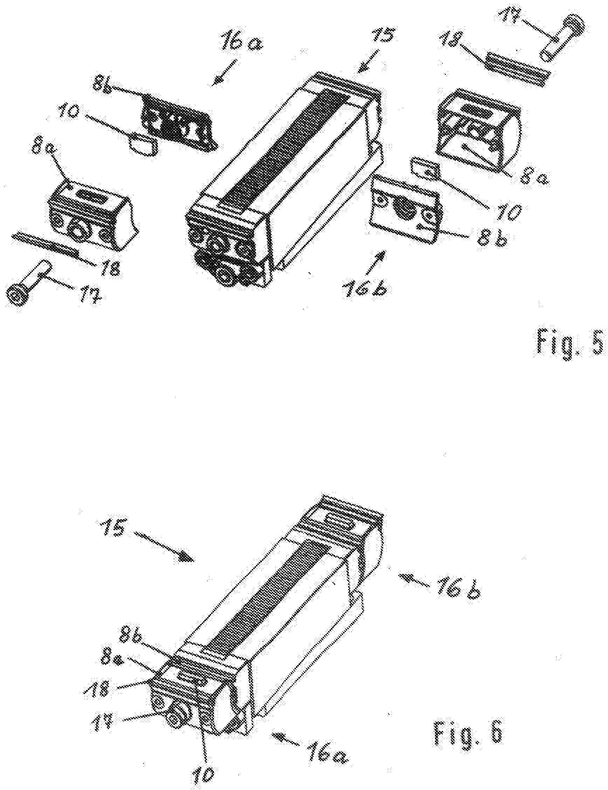

In den Figuren 5 und 6 ist ein Umlaufschuh 15 dargestellt, an dem beidseitig jeweils ein Vorsatzelement 16a an dem einen Ende und 16b an dem anderen Ende angeordnet ist. Die Vorsatzelemente 16a und 16b weisen den gleichen Aufbau auf und werden hier nur einmal beschrieben. Jedes Vorsatzelement ist mittels einer zentralen Schraube 17 an dem Tragkörper des Umlaufschuhs 15 befestigt. Zu sehen sind die beiden Gehäuseschalen 8a und 8b. Sie bilden das Speichervolumen aus, in dem in vorbekannter Weise Schmierstoff gespeichert werden kann. Der Schmierstoff wir über ein Schmierstoff-Übergabeeiement 10 zur Laufschiene hin abgegeben. Weiterhin ist auch ein Frontabstreifer 18 zu erkennen.

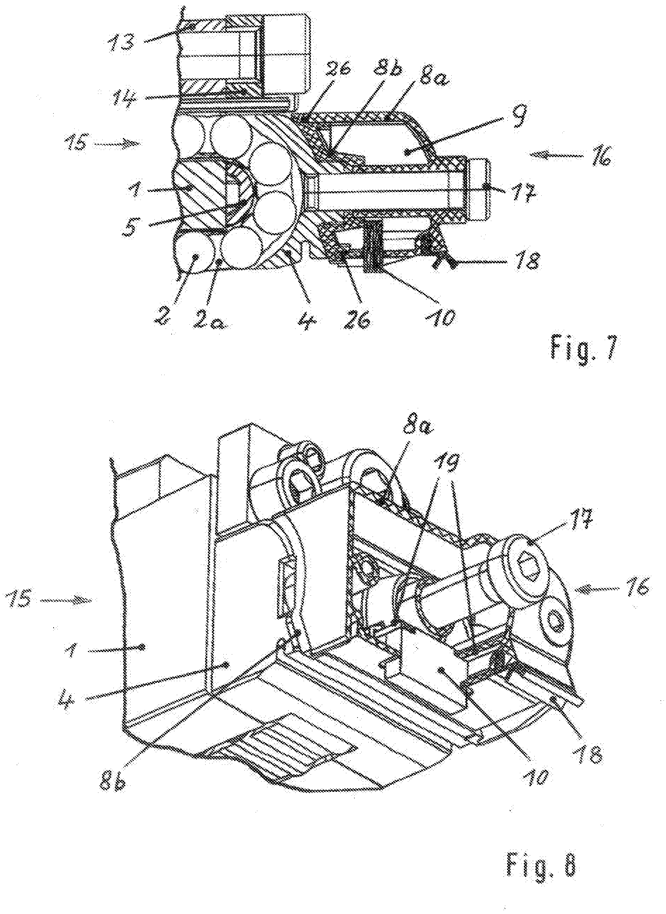

Figur 7 zeigt einen Detailschnitt durch ein Vorsatzelement 16, das an einem Umlaufschuh 15 an dessen einer Stirnseite mittels einer zentralen Schraube 17 befestigt ist. Zu sehen sind die beiden Gehäuseschalen 8a und 8b. Diese bilden das Speichervolumen 9 aus, in dem in vorbekannter Weise Schmierstoff gespeichert werden kann. Der Schmierstoff wird über ein Schmierstoff-Übergabeelement 10 zur Laufschine hin abgegeben. Weiterhin ist auch der Frontabstreifer 18 zu erkennen sowie die umlaufende Abdichtung der beiden Gehäuseschalen 8a und 8b, die hier zusätzlich als Labyrinth 26 ausgebildet ist. In diesem Fall sollte die äußere Gehäuseschale 8a aus einem festen starren Werkstoff und die innere Gehäuseschale 8b aus einem gummielastischen Werkstoff hergestellt werden. Zu sehen ist auch die Abdichtung der Durchgangsbohrung der Schraube 17 zwischen den beiden Gehäuseschalen 8a und 8b und dem Kopfstück 4 des Umlaufschuhs 15, sowie der Tragkörper 1 mit dem inneren Umlenkstück 5, einem Spacer 2a genannten Abstandsstück, mehreren als Rollen 2 ausgebildeten Wälzkörpern und einem Vorspannkeil 13 an der Vorspanneinheit 14.

Figur 8 zeigt das Vorsatzelement 16, welches an einer Stirnseite des Umlaufschuhs 15 angeordnet ist, im 3D-Schnitt. Zu erkennen sind die Federelemente 19, die das Schmierstoff-Übergabeelement 10 gegen eine nicht dargestellte Laufschiene vorspannen. Das Schmierstoff-Übergabeelement 10 wird mittels der Federelemente 19 sowie mit Teilen der Gehäuseschalen 8a und 8b axial in Vorspannungsrichtung geführt. Zu sehen sind auch das Kopfstück 4 des Tragkörpers 1, die Schraube 17 und der Frontabstreifer 18.

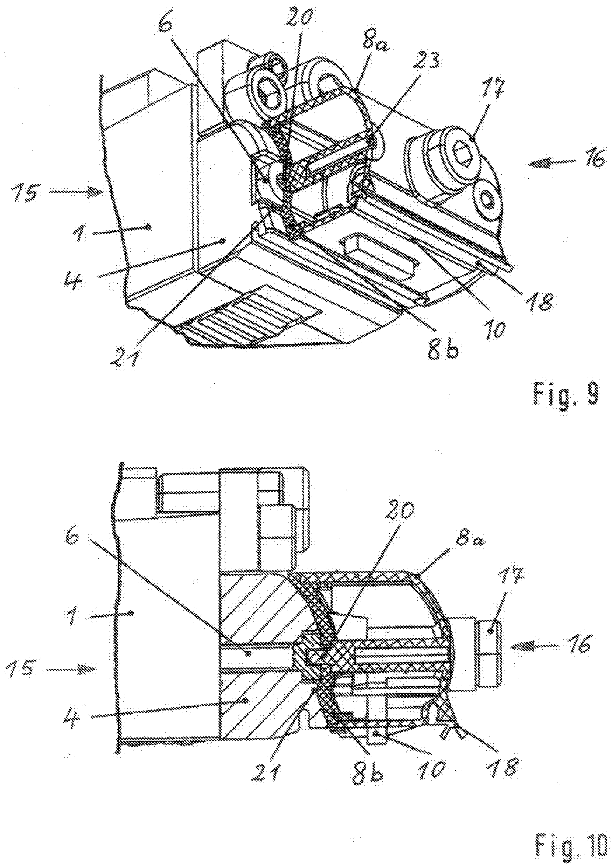

Die Figuren 9 und 10 zeigen jeweils ein Vorsatzelement 16, das an einer Stirnseite des Umlaufschuhs 15 angeordnet ist und dessen äußere Gehäuseschale 8a mindestens einen Zapfen 20 bereitstellt, der zur Achse der Befestigungsschraube 17 des Vorsatzelementes 16 radial versetzt ist und in eine Ausnehmung am Umlaufschuh 15 eingreift. Dies verhindert ein Verdrehen des Vorsatzelementes 16 beim Anziehen der Schraube 17. Exemplarisch wird in diesen Darstellungen der INBUS-Antrieb der Schraube 17 des Kopfstücks 4 des Umlaufschuhs 15 genutzt. Die Zentrierung des Vorsatzelementes kann auch über die Formgebung desselben zum Kopfstück 4 geschehen. Zu erkennen ist eine Nut 21 im Kopfstück 4, die normal zur Achse der Schraube 17 des Vorsatzelementes 16 angeordnet ist und durch ein formschlüssiges Eintauchen des aus den Gehäuseschalen 8a und 8b bestehenden Gehäuses eine Zentrierung des Vorsatzelementes 16 bereitstellt.

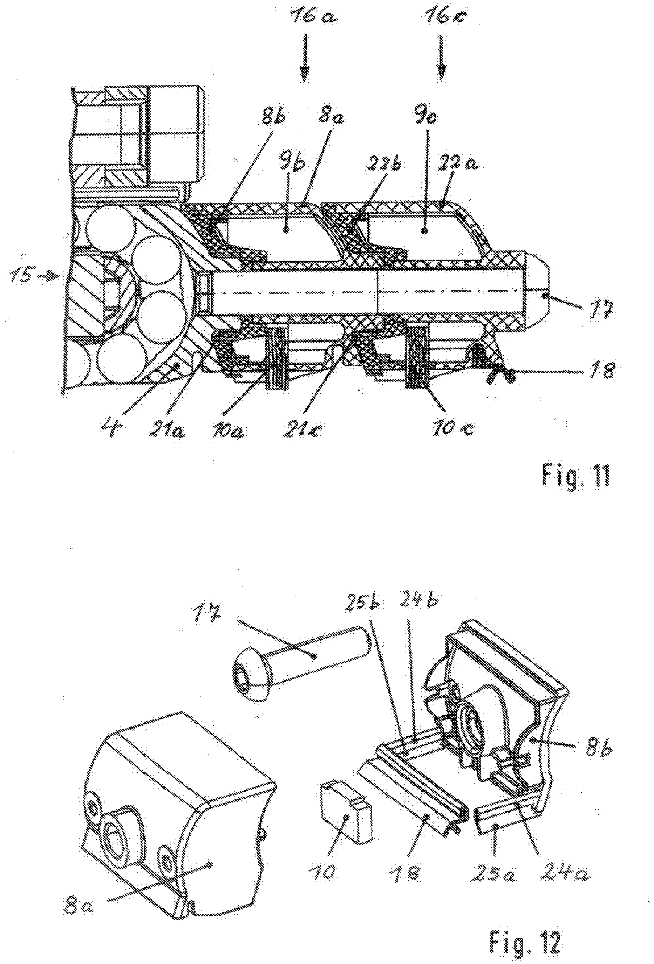

In Figur 11 ist der gleiche Schnitt wie in Figur 7 zu sehen, wobei hier an dem Umlaufschuh 15 zwei einseitig angebrachte Vorsatzelemente 16a und 16b zur Schmierstoffspeicherung angebracht sind. Auf diese Weise verdoppelt sich das Speichervolumen 9b und 9c. Der innere Aufbau der einzelnen Elemente ist gleich. Die Elemente bestehen aus den Gehäuseschalen 8a, 8b, 22a, 22b und den Schmierstoff-Übergabeelementen 10a und 10c sowie aus der die beiden Vorsatzelemente 16a und 16b mit dem Kopfstück 4 verbindenden Befestigungsschraube 17. Lediglich der Abstreifer 18 wird nur an dem äußeren Vorsatzelement 16c angeordnet, so dass der an die nicht dargestellte Laufschiene abgegebene Schmierstoff ungehindert an den Wälzkontakt gelangen kann. Die Stellen an den Schmierstoff-Übergafoeelementen 10a und 10c sollten bei solch einer Anwendung so gestaltet werden, dass sie nur die halbe Menge des Schmierstoffs gegenüber der Einzelanwendung an die Laufschiene abgeben. Das kann durch Halbierung der Kontaktfläche zur Laufschiene hin geschehen. Auf diese Weise kann die Laufleistung ohne Nachschmierung des gesamten Elementes erheblich gesteigert werden.

In Figur 12 ist das gleiche Vorsatzelement wie in der Schnittdarstellung in Figur 7 zu sehen, wobei in diesem Fall die innere Gehäuseschale 8b und der Abstreifer 18, die beide funktionsbedingt aus gummielastischen Werkstoffen bestehen, in Integralbauweise einteilig ausgeführt sind. Wenn diese örtlich voneinander entfernt in der Baugruppe liegen, können sie über Stege 24a und 24b miteinander verbunden werden. Die Stege 24a und 24b der inneren Gehäuseschale 8b müssen entsprechend in der äußeren Gehäuseschale 8a aufgenommen werden. Sie können zur Verbesserung der Gesamtabdichtung auch noch Dichtlippen 25a und 25b zur seitlichen Abdichtung tragen.

**Liste der Bezugszahlen**

| | | | |
|---|---|---|---|
| 1 | Tragkörper | 10c | Schmierstoff-Übergabeelement |
| 1a | Laufbahn | 11a | Speicherfaserbündel |
| 2 | Rolle | 11b | Speicherfaserbündel |
| 2a | Spacer, Abstandsstück | 12a | Feder |
| 3 | Schiene | 12b | Feder |
| 3a | Abdeckung | 13 | Vorspannkeil |
| 4 | Kopfstück | 14 | Vorspanneinheit |
| 4a | äußeres Umlenkstück | 15 | Umlaufschuh |
| 4b | äußeres Umlenkstück | 16 | Vorsatzelement |
| 5 | inneres Umlenkstück | 16a | Vorsatzelement |
| 5a | inneres Umlenkstück | 16b | Vorsatzelement |
| 5b | inneres Umlenkstück | 16c | Vorsatzelement |
| 6 | Befestigungsschraube | 17 | (Befestigungs-)Schraube |
| 6a | Schraube | 18 | (Front-)Abstreifer |
| 6b | Schraube | 19 | Federelement |
| 8 | Gehäusehälfte | 20 | Zapfen |
| 8a | äußere Gehäuseschale | 21 | Nut |
| 8b | innere Gehäuseschale | 21a | Konturverlauf |
| 8c | äußere Gehäusehälfte | 21c | Konturverlauf |
| 8d | innere Gehäusehälfte | 22a | äußere Gehäuseschale |
| 9 | Speichervolumen | 22b | innere Gehäuseschale |
| 9a | poröses Formteil | 23 | Aufnahmebohrung |
| 9b | Speichervolumen | 24a | Steg |
| 9c | Speichervolumen | 24b | Steg |
| 10 | Schmierstoff-Übergabeelement | 25a | Dichtlippe |
| 10a | Schmierstoff-Übergabeelement | 25b | Dichtlippe |
| 10b | Schmierstoff-Übergabeelement | 26 | Labyrinth |

## Patentansprüche

1. Wälzkörper-Umlaufschuh (15) für ein Linearwälzlager, mit an beiden Stirnseiten eines Tragkörpers (1) angeordneten Kopfstücken (4), an denen jeweils ein als Schmiervorrichtung vorgesehenes Vorsatzelement (16) angeordnet ist, das ein Volumen (9) zur Schmierstoff-Speicherung und Schmierstoff-Übergabe an eine den Umlaufschuh (15) führende Schiene enthält, wobei das Vorsatzelement (16) aufgrund seiner geometrisch vorbestimmten Form verdrehgesichert an dem Kopfstück (4) zentriert ist und aus einer an dem Kopfstück (4) des Tragkörpers (1) des Umlaufschuhs (15) anliegenden inneren Gehäuseschale (8b) und einer von dem Tragkörper (1) abgewandten äußeren Gehäuseschale (8a) besteht,
**dadurch gekennzeichnet, dass** die Gehäuseschalen (8a, 8b) mittels einer einzigen zentralen Schraube (17) an dem Kopfstück (4) des Tragkörpers (1) befestigt sind, wobei die zentrale Schraube (17) durch miteinander fluchtende Durchgangsbohrungen der äußeren Gehäuseschale (8a) sowie der inneren Gehäuseschale (8b) durchgeführt ist.

2. Wälzkörper-Umlaufschuh (15) nach Anspruch 1, dessen Vorsatzelement (16) ein Schmierstoff-Übergabeelement (10) aufweist, das gegen die Schiene hin den Verschleiß kompensierend vorspannbar ist.

3. Wälzkörper-Umlaufschuh (15) nach Anspruch 2, dessen Vorsatzelement (16) aufgrund seiner geometrisch vorbestimmten Form verdrehgesichert an einem baugleichen Vorsatzelement zentrier- und befestigbar ist.

4. Wälzkörper-Umlaufschuh (15) nach Anspruch 1, dessen Vorsatzelement (16) ein Speichervolumen (9b bzw. 9c) aufweist, das durch mindestens zwei Gehäuseschalengebilde (8a, 8b bzw. 22a, 22b) bereitgestellt ist, die durch die Vorspannkraft der einzigen zentralen Schraube (17) gegenseitig abgedichtet sind.

5. Wälzkörper-Umlaufschuh (15) nach Anspruch 1, dessen Vorsatzelement (16) so ausgeprägt ist, dass mindestens eine Gehäuseschale (8a bzw. 22a) einen Abstreifer (18) als gesondertes Bauteil aufnehmen kann, um gegen die Lauffläche abzudichten.

6. Wälzkörper-Umlaufschuh (15) nach Anspruch 1, dessen Vorsatzelement (16) so ausgeprägt ist, dass mindestens eine Gehäuseschale (8a) einen Abstreifer (18) aufnehmen kann, um gegen die Lauffläche abzudichten, wobei der Abstreifer (18) integral/einstückig mit der anderen, elastischen Gehäuseschale (8b) ausgeprägt wird.

## Claims

1. A bearing body (15) for a linear bearing, having head pieces (4) arranged on both end faces of a support element (1), on each of which head pieces an attachment element (16) is arranged as a lubricating device, which attachment element contains a volume (9) for storing lubricant and transferring lubricant to a rail that guides the body (15), wherein the attachment element (16) is non-rotationally centred on the head piece (4) due to its geometrically predefined form and consists of an inner housing shell (8b) abutting the head piece (4) of the support element (1) of the body (15) and an outer housing shell (8a) facing away from the support element (1), **characterised in that** the housing shells (8a, 8b) are fastened to the head piece (4) of the support body (1) by means of a single central screw (17), wherein the central screw (17) is guided through through-holes that are aligned with each other in the outer housing shell (8a) and the inner housing shell (8b).

2. The bearing body (15) according to claim 1, the attachment element (16) of which has a lubricant transfer element (10), which can be pretensioned against the rail to compensate for wear.

3. The bearing body (15) according to claim 2, the attachment element (16) of which can be centred and fastened in a non-rotational manner to an identical attachment element due to its geometrically predefined form.

4. The bearing body (15) according to claim 1, the attachment element (16) of which has a storage volume (9b or 9c), which is provided by at least two housing shell structures (8a, 8b or 22a, 22b), which are mutually sealed by the pretensioning force of the single central screw (17).

5. The bearing body (15) according to claim 1, the attachment element (16) of which is formed such that at least one housing shell (8a or 22a) can receive a scraper (18) as a separate component in order to seal against the running surface.

6. The bearing body (15) according to claim 1, the attachment element (16) of which is formed such that at least one housing shell (8a) can receive a scraper (18) in order to seal against the running surface, wherein the scraper (18) is formed integrally/in one piece with the other, elastic housing shell (8b).

## Revendications

1. Corps (15) pour palier à rouleau linéaire, comprenant des pièces de tête (4) disposées au niveau des deux faces frontales d'un corps de support (1), sur lesquelles est disposé respectivement un élément de bloc (16) conçu comme un dispositif de graissage, qui contient un volume (9) pour stocker et transférer le lubrifiant vers un rail dirigeant le corps (15), dans lequel l'élément de bloc (16), en raison de sa forme géométrique prédéfinie, est centré de manière bloquée en rotation sur la pièce de tête (4) et est constitué d'une coque de boîtier interne (8b) située sur la pièce de tête (4) du corps de support (1) du corps (15) et d'une coque de boîtier externe (8a) opposée au corps de support (1), **caractérisé en ce que** les coques de boîtier (8a, 8b) sont fixées à la pièce de tête (4) du corps de support (1) au moyen d'une vis centrale (17) unique, dans lequel la vis centrale (17) est réalisée par des alésages traversants alignés les uns par rapport aux autres de la coque de boîtier externe (8a) et de la coque de boîtier interne (8b).

2. Corps (15) selon la revendication 1, dont l'élément de bloc (16) présente un élément de transfert de lubrifiant (10), qui peut être précontraint contre le rail pour compenser l'usure.

3. Corps (15) selon la revendication 2, dont l'élément de bloc (16), en raison de sa forme géométrique prédéfinie, peut être centré et fixé de manière bloquée en rotation sur un élément de bloc de construction identique.

4. Corps (15) selon la revendication 1, dont l'élément de bloc (16) présente un volume de stockage (9b ou 9c), qui est fourni par au moins deux structures de coque de boîtier (8a, 8b ou 22a, 22b), qui sont mutuellement scellées par la force de précontrainte de la vis centrale (17) unique.

5. Corps (15) selon la revendication 1, dont l'élément de bloc (16) est réalisé de telle sorte qu'au moins une coque de boîtier (8a ou 22a) puisse recevoir un racleur (18) comme composant séparé, afin de créer une étanchéité contre la surface de roulement.

6. Corps (15) selon la revendication 1, dont l'élément de bloc (16) est réalisé de telle sorte qu'au moins une coque de boîtier (8a) puisse recevoir un racleur (18), afin de créer une étanchéité contre la surface de roulement, dans lequel le racleur (18) est réalisé de manière intégrée/d'un seul tenant avec l'autre coque de boîtier élastique (8b).
